# EUROPÄISCHE PATENTSCHRIFT

(11) **EP 1 022 197 B1**
(45) Veröffentlichungstag und Bekanntmachung des Hinweises auf die Patenterteilung: **05.11.2003**
(21) Anmeldenummer: 99124896.4
(22) Anmeldetag: 17.12.1999
(51) Int. Cl.: B60R 21/26, B60R 21/16

(54) **Insassenschutzvorrichtung für ein Fahrzeug mit einer Airbageinrichtung**
Occupant protective device for a vehicle with an air bag arrangement
Dispositif de protection de passager pour un véhicule avec un agencement de sac de sécurité gonflable

(30) Priorität: 19.01.1999 DE 19901811
(43) Veröffentlichungstag der Anmeldung: 26.07.2000
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)
(74) Vertreter: Neubauer, Hans-Jürgen, Dipl.-Phys.

(56) Entgegenhaltungen:
- EP-A- 0 860 332
- DE-A- 19 514 681
- DE-A- 19 545 263
- US-A- 3 853 334

## Beschreibung

Die Erfindung betrifft eine Insassenschutzvorrichtung für ein Fahrzeug mit einer Airbageinrichtung nach dem Oberbegriff des Anspruchs 1.

Insassenschutzvorrichtungen für Fahrzeuge mit Airbageinrichtungen sind allgemein in unterschiedlichen Ausführungsformen bekannt. Alle diese Airbageinrichtungen umfassen einen Airbag, der an einen Gasgenerator angeschlossen und im Crashfall zu einem Gaspolster aufblasbar ist. Airbaganordnungen sind beispielsweise als Fahrerairbag in einer Lenkradnabe, als Beifahrerairbag in einer Schalttafel und als Seiten- und/oder Kopfairbag in Karosserie- und Türverkleidungen sowie an Fahrzeugsitzen bekannt. Regelmäßig sind dabei ein Gasgenerator mit Diffusor und ein zusammengefalteter Airbag in einem Airbagmodul zusammengefaßt.

Für eine gute Schutzfunktion ist es erforderlich, daß ein gefüllter Airbag einen Aufprall eines Insassen in einem unelastischen Stoß unter Absorption von Aufprallenergie verzögert abfängt. Dazu wird aus dem gefüllten Airbag Gas durch Ausblasöffnungen ausgeleitet, so daß der Airbag nur sehr kurze Zeit in seinem aufgeblasenen Zustand steht und anschließend insbesondere bei einem Insassenaufprall zusammenfällt. US-A-3 853 334 beschreibt eine Vorrichtung gemäß dem Oberbegriff des Anspruchs 1, bei der ein solcher Airbag als Schutzeinrichtung für einen Sekundäraufprall und weitere Kollisionen, die im gleichen Unfallgeschehen auftreten können, zur Verfügungsteht.

Aufgabe der Erfindung ist es, eine gattungsgemäße Insassenschutzvorrichtung für ein Fahrzeug mit einer Airbageinrichtung so weiterzubilden.

Diese Aufgabe wird mit den Merkmalen des Anspruchs 1 gelöst.

Gemäß Anspruch 1 ist dem Airbag im Crashfall zusätzlich zum Gas aus dem Gasgenerator wenigstens ein Schaumgrundmaterial zuführbar, welches aufschäumt und zusätzlich zum Gaspolster ein bleibendes Schaumstoffpolster insbesondere als Schutz bei einer Sekundärkollision bildet, so daß ein kombinierter Gas-/Schaumairbag ausgebildet wird.

Damit wird in üblicher Weise bei einer Primärkollision schnell ein Schutz durch einen mit Gas aus dem Gasgenerator befüllten Airbag als Gaspolster zur Verfügung gestellt. Zudem bildet sich durch das zusätzlich zugeführte Schaumgrundmaterial ein Schaumstoffpolster, welches sich zwar nicht so schnell aufbläst und ausbildet wie das Gaspolster, jedoch bei geeigneter Auswahl des Schaummaterials ebenfalls sehr schnell aufbaubar ist und bei einer zeitlich nachfolgenden Sekundärkollision bereits als Schutz für einen Insassenaufprall zur Verfügung steht. Der Insassenaufprall auf das Schaumstoffpolster erfolgt ebenfalls in einem unelastischen Stoß mit einer vorteilhaften Absorption von Aufprallenergie. Da das Schaumstoffpolster zumindest für eine gewisse Zeit erhalten bleibt und nicht wie ein übliches Gaspolster sofort wieder zusammenfällt, ist ein wirksamer Schutz für eine spätere Sekundärkollision oder für weitere Kollisionen gegeben, ohne daß der genaue Zeitpunkt einer solchen späteren Kollision mit der Schutzeinrichtung, wie im Falle der Gasgeneratoraktivierung, korrelliert werden müßte.

Erfindungsgemäß wird somit ein kombinierter Gas-/Schaumairbag zur. Verfügung gestellt, mit einer schnell und auf eine Primärkollision abgestimmten Aktivierung des Gasairbags sowie eines sich zeitgleich oder zeitversetzt ausbildenden Schaumstoffpolsters im Bereich des Airbags als Schutz für eine spätere, zeitlich nicht vorhersehbare Kollision.

Je nach den individuellen Gegebenheiten und der Art des Schaumgrundmaterials kann es zweckmäßig sein, dieses gleichzeitig oder zeitversetzt zur Gaszufuhr in den Airbag einzublasen.

In einer kompakten, als Modul ausführbaren Bauweise wird vorteilhaft nach dem Gasgenerator bzw. nach dem Diffusor ein Ejektor angeordnet, an den wenigstens ein mit Schaumgrundmaterial gefüllter Behälter angeschlossen ist. Der Behälteranschluß kann gleichzeitig oder zeitversetzt mit der Aktivierung des Gasgenerators öffenbar gestaltet sein, wobei dann das aus dem Gasgenerator ausströmende Gas in einer Pumpwirkung das Schaumgrundmaterial aus dem Behälter herausbefördert und mit in den Airbag bläst. Je nach den Gegebenheiten kann es auch zweckmäßig sein, für das Einbringen des Schaumgrundmaterials in den Airbag eine selbstständige Pumpe vorzusehen oder einen weiteren, zusätzlichen Gasgenerator einzusetzen, wobei mit solchen Anordnungen größere Freiräume hinsichtlich der Steuerung der Zeitabläufe und der Einblasvorgänge möglich sind.

Als Schaumgrundmaterialien stehen aus dem Stand der Technik eine Anzahl von Materialien mit unterschiedlichen Eigenschaften zur Verfügung. Insbesondere gibt es Schaumgrundmaterialen in ein oder zwei Komponentenausführung die durch Reaktion mit dem Gas aus dem Gasgenerator und/oder durch Reaktion unterschiedlicher Komponenten aufschäumen. Dieses Aufschäumen kann im konkreten Fall zu einem zusammenhängenden Schaumpolster als Schaumstoffschutzpolster führen. Gegebenenfalls ist eine Schutzfunktion auch dadurch zu erreichen, daß beim Aufschäumen eine Mehrzahl kleinerer, zusammenhängender Schaumstoffpartikel oder Schaumstoffflocken entstehen, die durch den umhüllenden Airbag zusammengehalten werden und dadurch ein Schaumstoffschutzpolster für einen Insassenaufprall bilden. Wesentlich ist in jedem Fall, daß das Schaumgrundmaterial zu einem Schaumstoffpolster mit einer für einen Insassenaufprall geeigneten Kraft-Weg-Kennung aufschäumt.

Die üblichen Ausströmöffnungen des Airbags werden vorteilhaft so klein bemessen, daß Schaumpartikel insbesondere auch beim Einblasen des Schaumgrundmaterials nicht aus dem Bereich des Airbags herausdrückbar sind.

In einer alternativen Ausführungsform, die ebenfalls die gleiche Aufgabe löst, wird ein üblicher, nur mit Gas befüllbarer Primär-Airbag als. Schutz für einen Primäraufprall vorgeschlagen. In diesem Primär-Airbag ist ein weiterer Sekundär-Airbag als Schutz für eine Sekundärkollision und weitere Kollisionen enthalten. Dieser Sekundär-Airbag ist entsprechend den vorgenannten Maßnahmen mit Schaummaterial und ggf. zusätzlich mit Gas befüllbar. Damit fällt auch hier der mit Gas befüllte Primär-Airbag nach einer Primärkollision zusammen und der sich regelmäßig etwas später mit seiner Schaumfüllung ausbildende Sekundär-Airbag bleibt als Schutzmaßnahme für weitere Kollisionen bestehen.

Anhand einer Zeichnung wird die Erfindung näher erläutert.

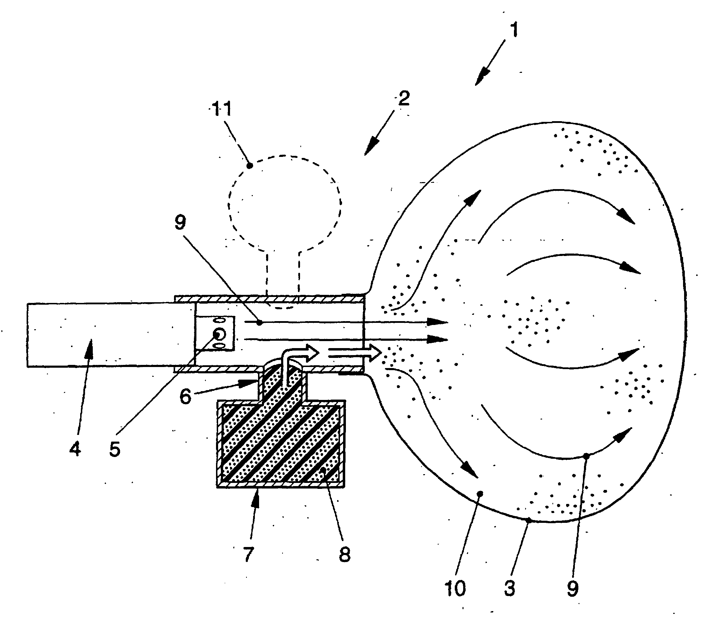

Die einzige Figur zeigt schematisch eine Insassenschutzvorrichtung 1 für ein Fahrzeug mit einer Airbageinrichtung 2. Diese Airbageinrichtung 2 umfaßt einen Airbag 3, der an einem Gasgenerator 4 angeschlossen ist. Im in der Fig. 1 dargestellten Crashfall wird dieser Airbag 3 mit Gas aus dem Gasgenerator 4 zu einem Gaspolster aufgeblasen. Das Gas strömt dabei über einen Diffusor 5 aus dem Gasgenerator 4 aus.

Wie dies der Zeichnung weiter entnommen werden kann, ist nach dem Diffusor 5 ein Ejektor 6 angeordnet, an den ein Behälter 7 angeschlossen ist. Dieser Behälter 7 ist mit einem Schaumgrundmaterial 8, z. B. einem Granulat oder einer Flüssigkeit, gefüllt.

Im Crashfall, bei dem der Airbag 3 mit dem Gas aus dem Gasgenerator 4 zu einem Gaspolster aufgeblasen wird, öffnet sich der Behälteranschluß entweder zusammen oder zeitversetzt mit der Aktivierung des Gasgenerators 4. Dadurch saugt das aus dem Gasgenerator 4 ausströmende Gas, wie es in der Fig. 1 mit den Pfeilen 9 gekennzeichnet ist, das Schaumgrundmaterial 8 in einer Pumpwirkung aus dem Behälter 7 heraus und bläst es in den Airbag 3 mit ein.

Das in den Airbag 3 eingeblasene Schaumgrundmaterial 8 schäumt im Airbag 3 zu Schaumstoffpartikeln 10 auf und bildet zusätzlich zum Gaspolster ein bleibendes Schaumstoffpolster mit einer für einen Insassenaufprall geeigneten Kraft-Weg-Kennung aus.

Durch das zusätzlich eingeblasene Schaumgrundmaterial 8, das im Crashfall aufschäumt und ein Schaumstoffpolster bildet, steht somit bei einer Sekundärkollision, die einer Primärkollision zeitlich nachfolgt, zusätzlich zum Gaspolster ein weiterer Aufprallschutz durch das Schaumstoffpolster auch dann zur Verfügung, wenn das in den Airbag 3 eingeblasene Gas bereits wieder über die hier nicht dargestellten Ausströmöffnungen aus dem Airbag 3 ausgetreten ist.

In einer alternativen Ausführungform, die hier allerdings nicht dargestellt ist, kann das Einblasen des Schaumgrundmaterials 8 in den Airbag 3 auch über einen weiteren Gasgenerator oder eine selbstständige Pumpe geschehen. Das Schaumgrundmaterial 8 kann alternativ statt nur einer einzigen Komponente auch zwei Komponenten umfassen, wobei die unterschiedlichen Komponenten dann entweder durch Reaktion miteinander und/oder mit dem Gas zu einem Schaumstoffpolster im Airbag 3 aufschäumen. Bei einem Mehrkomponenten-Schaumgrundmaterial kann für die weitere Komponente ein zusätzlicher Behälter 11 vorgesehen sein, wie er in der Fig. 1 schematisch und lediglich strichliert eingezeichnet ist.

In einer weiteren alternativen Ausführungsform, die hier ebenfalls nicht dargestellt ist, ist ein nur mit Gas befüllbarer Primär-Airbag vorgesehen. In diesem Primär-Airbag ist ein Sekundär-Airbag enthalten, der mit Schaumgrundmaterial und ggf. zusätzlich mit Gas befüllbar ist. Sobald der mit Gas befüllte Primär-Airbag nach einer Primärkollision zusammengefallen ist, bleibt dann als weitere Schutzmaßnahme für eine Sekundärkollision der mit einem- Schaumstoffpolster aufgefüllte Sekundär-Airbag bestehen.

### BEZUGSZEICHENLISTE

- 1: Insassenschirtzvorochtung
- 2: Airbageinrichtung
- 3: Airbag
- 4: Gasgenerator
- 5: Diffusor
- 6: Ejektor
- 7: Behälter
- 8: Schaumgrundmaterial
- 9: Pfeil
- 10: aufgeschäumte Schaumstoffpartikel
- 11: Behälter

## Patentansprüche

1. Insassenschutzvorrichtung für ein Fahrzeug mit einer Airbageinrichtung, die einen Airbag (3) umfaßt, der an einen Gasgenerator (4) angeschlossen und im Crashfall mit Gas aus dem Gasgenerator zu einem Gaspolster aufblasbar ist, wobei
dem Airbag (3) im Crashfall zusätzlich zum Gas aus dem Gasgenerator (4) wenigstens ein Schaummaterial (8) zuführbar ist, welches zusätzlich zum Gaspolster ein bleibendes Schaumstoffpolster, insbesondere als Schutz bei einer Sekundärkollision, bildet, so daß ein kombinierter Gas/Schaumairbag (3) ausgebildet wird, **dadurch gekennzeichnet,**
**daß** das Schaummaterial als Schaumgrundmaterial (8) zuführbar ist, welches im Craschfall im Airbag (3) durch Reaktion mit dem Gas und/oder durch Reaktion unterschiedlicher Komponenten des Schaumgrundmaterials aufschäumber ist.

2. Insassenschutzvorrichtung nach Anspruch 1, **dadurch gekennzeichnet, daß** das Schaumgrundmaterial (8) gleichzeitig oder zeitversetzt zur Gaszufuhr zugeführt wird.

3. Insassenschutzvorrichtung nach Anspruch 1 oder Anspruch 2, **dadurch gekennzeichnet, daß** der Gasgenerator (4), vorzugsweise nach einem Diffusor (5), mit einem Ejektor (6) ausgerüstet ist, an den wenigstens ein mit dem Schaumgrundmaterial (8) gefüllter Behälter (7; 11) angeschlossen ist.

4. Insassenschutzvorrichtung nach Anspruch 3, **dadurch gekennzeichnet, daß** ein Anschluß des Behälters (7; 11) zusammen oder zeitversetzt mit der Aktivierung des Gasgenerators (4) öffenbar ist, derart, daß das aus dem Gasgenerator (4) ausströmende Gas das Schaumgrundmaterial (8) mit in den Airbag (3) bläst.

5. Insassenschutzvorrichtung nach einem der Ansprüche 1 bis 4, **dadurch gekennzeichnet, daß** zum Einblasen des Schaumgrundmaterials (8) in den Airbag (3) ein weiterer, zugeordneter Gasgenerator und/oder eine selbstständige Pumpe vorgesehen ist/sind.

6. Insassenschutzvorrichtung nach einem der Ansprüche 1 bis 5, **dadurch gekennzeichnet, daß** das Schaumgrundmaterial (8) in einer Komponente oder getrennt in wenigstens zwei Komponenten zur Verfügung steht und durch Reaktion mit dem Gas und/oder durch Reaktion der unterschiedlichen Komponenten zu einem zusammenhängenden oder aus einer Mehrzahl einzelner Schaumstoffpartikel im Airbag (3) gebildeten Schaumstoffpolster mit vorgegebener Kraft-Weg-Kennung aufschäumbar ist.

7. Insassenschutzvorrichtung nach einem der Ansprüche 1 bis 6, **dadurch gekennzeichnet, daß** der Airbag (3) gasdurchlässig ist und dazu Ausströmöffnungen aufweist, die so klein bemessen sind, daß Schaumpartikel nicht herausdrückbar sind.

8. Insassenschutzvorrichtung nach einem .der Ansprüche 1 bis 7, **dadurch gekennzeichnet, daß** ein nur mit Gas befüllbarer Primär-Airbag vorgesehen ist, in dem ein mit Schaumgrundmaterial, und gegebenenfalls zusätzlich mit Gas, befüllbarer Airbag als Sekundär-Airbag enthalten ist.

## Claims

1. Vehicle occupant protection device for a vehicle having an airbag arrangement which comprises an airbag (3) which is connected to a gas generator (4) and in the event of a crash can be inflated with gas from the gas generator to form a gas cushion, in the event of a crash it being possible to feed at least one foam material (8) to the airbag (3) in addition to the gas from the gas generator (4), said foam material (8) forming, in addition to the gas cushion, an enduring foam material cushion, in particular as a protection in the event of a secondary collision, so that a combined gas/foam airbag (3) is formed, **characterized in that** the foam material can be fed as foam basic material (8) which can be expanded in the event of a crash in the airbag (3) by reaction with the gas and/or by reaction with the different components of the foam basic material.

2. Vehicle occupant protection device according to Claim 1, **characterized in that** the foam basic material (8) is fed simultaneously or with a time offset with respect to the gas supply.

3. Vehicle occupant protection device according to Claim 1 or Claim 2, **characterized in that** the gas generator (4) is preferably equipped, downstream of a diffuser (5), with an ejector (6) to which at least one container (7; 11) filled with the foam basic material (8) is connected.

4. Vehicle occupant protection device according to Claim 3, **characterized in that** an outlet of the container (7; 11) can be opened together with or with a time offset with respect to the actuation of the gas generator (4) in such a way that the gas which flows out of the gas generator (4) also blows the foam basic material (8) into the airbag (3).

5. Vehicle occupant protection device according to one of Claims 1 to 4, **characterized in that**, in order to blow the foam basic material (8) into the airbag (3), a further, assigned gas generator and/or an automatic pump is/are provided.

6. Vehicle occupant protection device according to one of Claims 1 to 5, **characterized in that** the foam basic material (8) is made available in one component or separated into at least two components and can be expanded with a predefined force/travel characteristic by reaction with the gas and/or reaction with the different components to form a coherent foam cushion or a foam cushion formed from a multiplicity of individual foam particles in the airbag (3).

7. Vehicle occupant protection device according to one of Claims 1 to 6, **characterized in that** the airbag (3) is gas-permeable and for this purpose has outflow openings whose dimensions are so small that front particles cannot be foam pressed out.

8. Vehicle occupant protection device according to one of Claims 1 to 7, **characterized in that** a primary airbag which can be filled only with gas is provided, said airbag containing, as secondary airbag, an airbag which can be filled with foam basic material, and if appropriate additionally with gas.

## Revendications

1. Dispositif de protection d'occupant d'un véhicule avec un dispositif d'airbag, qui comprend un airbag (3) qui est raccordé à un générateur de gaz (4) et qui peut être gonflé avec du gaz provenant du générateur de gaz pour fournir un coussin de gaz dans le cas d'une collision,
au moins un matériau en mousse (8) pouvant être amené à l'airbag (3) dans le cas d'une collision en plus du gaz provenant du générateur de gaz (4), lequel matériau forme, en plus du coussin de gaz, un coussin en mousse permanent, en particulier servant de protection dans le cas d'une collision secondaire, de sorte qu'un airbag combiné à gaz et en mousse (3) soit réalisé, **caractérisé en ce que** le matériau en mousse peut être amené sous forme de matériau de base pour la mousse (8) qui peut être moussé dans l'airbag (3) par réaction avec le gaz et/ou par réaction avec divers composants du matériau de base pour la mousse dans le cas d'une collision.

2. Dispositif de protection d'occupant selon la revendication 1, **caractérisé en ce que** le matériau de base pour la mousse (8) est amené simultanément ou avec un décalage temporel à l'alimentation en gaz.

3. Dispositif de protection d'occupant selon la revendication 1 ou la revendication 2, **caractérisé en ce que** le générateur de gaz (4), de préférence après un diffuseur (5), est équipé d'un éjecteur (6), auquel est raccordé au moins un récipient (7 ; 11) rempli avec le matériau de base pour la mousse (8).

4. Dispositif de protection d'occupant selon la revendication 3, **caractérisé en ce qu'**un raccordement du récipient (7 ; 11) peut être ouvert simultanément ou avec un décalage temporel à l'activation du générateur de gaz (4) de telle sorte que le gaz sortant du générateur de gaz (4) injecte le matériau de base pour la mousse (8) simultanément avec lui dans l'airbag (3).

5. Dispositif de protection d'occupant selon l'une quelconque des revendications 1 à 4, **caractérisé en ce que** pour l'injection du matériau de base pour la mousse (8) dans l'airbag (3), on prévoit un autre générateur de gaz associé et/ou une pompe autonome.

6. Dispositif de protection d'occupant selon l'une quelconque des revendications 1 à 5, **caractérisé en ce que** le matériau de base pour la mousse (8) est disponible en un composant ou en deux composants séparés au moins, et peut être moussé par réaction avec le gaz et/ou par réaction des différents composants pour fournir un coussin de mousse cohérent ou formé à partir d'une pluralité de particules de mousse individuelles dans l'airbag (3), avec une caractéristique force-distance préétablie.

7. Dispositif de protection d'occupant selon l'une quelconque des revendications 1 à 6, **caractérisé en ce que** l'airbag (3) est perméable au gaz et présente à cet effet des ouvertures d'échappement qui sont dimensionnées de manière suffisamment petite pour que les particules de mousse ne puissent pas s'en échapper.

8. Dispositif de protection d'occupant selon l'une quelconque des revendications 1 à 7, **caractérisé en ce que** l'on prévoit un airbag primaire ne pouvant être rempli qu'avec du gaz, dans lequel est contenu un airbag pouvant être rempli d'un matériau de base pour la mousse, et éventuellement aussi avec du gaz, servant d'airbag secondaire.
